# DEMANDE DE BREVET EUROPEEN

(11) **EP 3 742 062 A1**
(43) Date de publication de la demande: **25.11.2020**
(21) Numéro de dépôt: 20175588.1
(22) Date de dépôt: 20.05.2020
(51) Int. Cl.: F24F 5/00, F24F 11/00, F24F 12/00

(54) **ECHANGEUR THERMIQUE A DOUBLE CIRCUIT**

(30) Priorité: 24.05.2019 CH 6732019
(71) Demandeur: Haute Ecole d'ingenierie et d'architecture de Fribourg (HEIA-FR), 1705 Fribourg (CH)
(72) Inventeur: Robadey, Jacques, 1723 Marly (CH)
(74) Mandataire: P&TS SA (AG, Ltd.)

(57) **Abrégé**

Echangeur thermique pour réguler la température interne d'un bâtiment, comprenant un module d'échange thermique, un module de renouvellement d'air, un circuit d'air, un circuit d'eau ou d'un autre fluide, un ventilateur disposé entre le module de renouvellement d'air et le module d'échange thermique, et deux vannes trois voies disposées l'une en amont, l'autre en aval du ventilateur. L'échangeur thermique peut contenir un ou plusieurs autres éléments tels que vannes et ventilateurs.

## Description

### Domaine technique

La présente invention concerne un échangeur thermique permettant de réguler les variations périodiques de température. En particulier, la présente invention se réfère à un échangeur thermique permettant de maintenir des échanges d'air entre l'intérieur et l'extérieur d'un bâtiment tout en limitant les variations de températures et les consommations d'énergie relatives au maintien des températures. L'échangeur thermique comprend avantageusement des matériaux à changement de phase permettant un important stockage d'énergie thermique. L'invention couvre également une méthode de régulation thermique au moyen d'un tel échangeur thermique.

### Etat de la technique

La consommation énergétique des bâtiments est un enjeu important dans les considérations écologiques et économiques. Le chauffage des bâtiments est en l'occurrence un des éléments principaux responsables de leur consommation énergétique. De plus en plus de bâtiments sont en outre climatisés, ce qui contribue à davantage de dépenses énergétiques.

Par ailleurs, les bâtiments doivent permettre une circulation d'air régulière pour le maintien d'une qualité de l'air optimale et pour l'assainissement des intérieurs. Les procédés d'isolation mis en oeuvre, s'ils peuvent être performants, nécessitent dans tous les cas de préserver une circulation d'air dans les locaux. L'isolation n'est alors pas toujours suffisante pour empêcher les variations de température, notamment via les circulations d'air dont les températures peuvent être significativement plus froides ou plus chaudes que celle des intérieurs.

De surcroît, les dispositifs d'isolation sont passifs et se limitent à freiner les variations de température. Ils peuvent devenir inefficaces, notamment lors de périodes prolongées durant lesquelles les températures extérieures sont inconfortables, voire extrêmes. De fortes dépenses énergétiques deviennent alors nécessaires pour contrebalancer les lacunes liées à une isolation passive. Cette dernière amplifie même les effets de serre estivaux des chambres orientées sud en y piégeant la chaleur du rayonnement solaire et de surcroit ne permet pas de profiter de la fraicheur nocturne pour rétablir à moindre frais des températures de confort.

Des systèmes d'échange thermique existent, faisant appel notamment à des matériaux à changement de phase. Ces systèmes d'échange thermique se limitent cependant dans la plupart des cas à exploiter l'inertie thermique de tels matériaux pour atténuer les variations de température des flux d'air entrants cycliques. De tels systèmes d'échanges thermiques restent donc passifs et sont inappropriés lorsqu'une variation de température est désirée ; il est en effet judicieux de maintenir une température fraîche dans un bâtiment inoccupé et de l'élever dès son occupation.

Il y a donc matière à améliorer ces systèmes grâce à une régulation active des températures, qui permettent en outre une circulation d'air optimale dans les bâtiments.

### Bref résumé de l'invention

La présente invention permet de palier aux inconvénients précités, notamment grâce à l'utilisation d'un échangeur thermique à double circuit. L'échangeur thermique selon la présente invention comprend en particulier un circuit d'air et un circuit d'eau, les deux circuits d'air et d'eau étant en contact avec un module d'échange thermique. L'échangeur thermique comprend un module de renouvellement d'air faisant partie du circuit d'air, comprenant au moins un ventilateur et au moins deux vannes trois voies, permettant d'optimiser les échanges d'air entre l'extérieur et l'intérieur du bâtiment et à travers le module d'échange thermique.

Un ventilateur du circuit d'air peut être disposé entre le module de renouvellement d'air et le module d'échange thermique. Une vanne configurée pour appliquer un mode «renouvellement d'air», laissant transiter l'air depuis une admission extérieure vers le ventilateur, ou un mode « recyclage d'air », laissant transiter l'air depuis une admission intérieure vers ce ventilateur, peut être disposée entre le module de renouvellement d'air et ce même ventilateur.

Une autre vanne, configurée pour appliquer un mode « isotherme », laissant transiter l'air depuis le ventilateur vers une sortie en amont du module d'échange thermique, ou pour appliquer un mode « échange thermique », laissant transiter l'air à travers le module d'échange thermique, peut être disposée entre le ventilateur et le module d'échange thermique.

Le circuit d'air peut comprendre une vanne supplémentaire, disposée entre une admission d'air interne à la pièce, et une sortie d'air vers l'extérieur.

Le circuit d'eau peut être connecté à une source d'eau chaude, telle que le circuit de chauffage du bâtiment ou une pompe à chaleur, ou bien à une source d'eau froide, ou bien à une source d'eau pouvant être alternativement chauffée et refroidie. Le circuit d'eau permet d'initier des échanges thermiques avec le module d'échange thermique. Le circuit d'eau peut désigner tout système d'approvisionnement de chaleur ou de froid. Alternativement, un autre liquide que l'eau, tel qu'un liquide caloporteur comme de l'huile ou des mélanges additivés peuvent être considérés. D'autres fluides que les liquides, notamment les gaz, compressés ou non compressés, peuvent être utilisés dans le cadre de la présente invention. En l'occurrence, une conduite d'air chaud ou frais peut être mise en oeuvre à cette fin. Alternativement, une résistance électrique ou un moyen de rafraichissement par condensation, intégrée au module d'échange thermique, ou tout moyen équivalent de chauffage ou de rafraichissement, peut être mis en oeuvre.

Le module d'échange thermique peut comprendre un ou plusieurs matériaux à changement de phase. La température de changement de phase de tels matériaux est avantageusement comprise entre environ 21°C et 28°C.

L'échangeur thermique selon la présente invention peut en outre comprendre des systèmes d'automatisation, comprenant un ou plusieurs capteurs de température et/ou une unité de commande. Les capteurs et les éléments activables de l'échangeur thermique tels que vannes et ventilateurs peuvent alors être pilotés par l'unité de commande.

La présente invention couvre également un procédé de régulation thermique d'un bâtiment, comprenant une ou plusieurs phases de charge et de relargage. Le procédé de régulation comporte en outre une ou plusieurs phases de stockage.

Une phase de charge peut permet l'accumulation de chaleur ou de froid. Une phase de relargage permet la libération de chaleur ou de froid. Une phase de stockage permet de maintenir l'échangeur thermique à une température donnée, servant de stock de chaleur ou de froid.

De préférence, les phases de charge et stockage de chaleur, et de charge et stockage de froid sont effectuées en combinant le mode «isotherme» avec l'un ou l'autre des modes «renouvellement d'air» et «recyclage d'air ». Les phases de relargage de chaleur et de relargage de froid sont effectuées de préférence en mode « échange thermique ».

### Brève description des figures

Des exemples de mise en oeuvre de l'invention sont indiqués dans la description illustrée par les figures annexées :

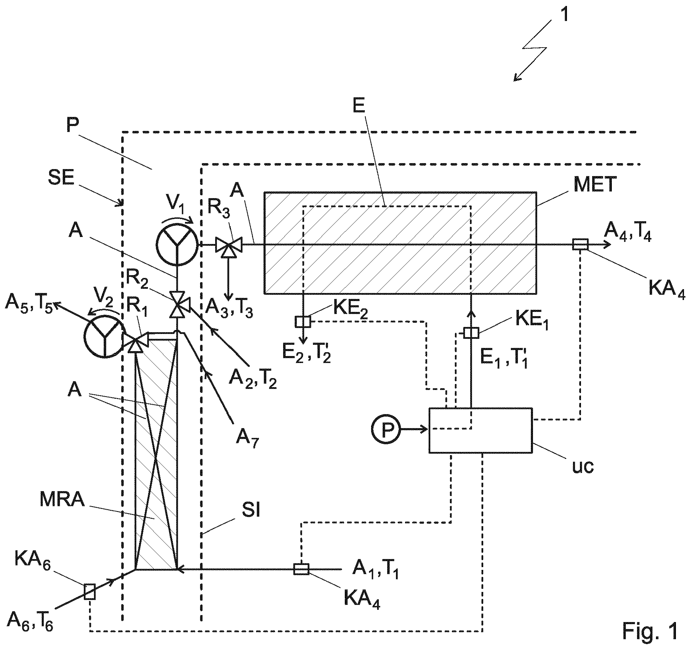

- Figure 1 : vue schématique de l'échangeur thermique selon la présente invention.

### Exemple(s) de mode de réalisation de l'invention

L'échangeur thermique **1** selon la présente invention comporte un module d'échange thermique **MET,** un module de renouvellement d'air MRA, un circuit d'air **A** et un circuit d'eau **E.** Le module de renouvellement d'air **MRA** permet l'échange d'air entre l'intérieur et l'extérieur d'une pièce, soit dans le sens de l'intérieur vers l'extérieur, soit dans le sens inverse, depuis l'extérieur de la pièce vers l'intérieur, soit dans les deux sens opposés. Les espaces intérieur et extérieur sont séparés par une paroi **P** ayant une surface intérieure **SI** et une surface extérieure **SE.** Le module de renouvellement d'air **MRA** peut prendre la forme d'une VMC par exemple, connue pour désigner une Ventilation Mécanique Contrôlée. Tout autre système permettant les échanges d'air mécanisés de part et d'autre d'une paroi **P** sont envisageables. Le circuit d'air **A** peut comprendre à cet effet un premier ventilateur **V1,** permettant de faire circuler l'air dans ce circuit d'air **A** depuis son admission dans le circuit d'air **A** vers l'une de ses sorties. Le premier ventilateur **V1** est disposé entre le module de renouvellement d'air **MRA** et le module d'échange thermique **MET.** Le premier ventilateur **V1** peut par exemple conduire de l'air depuis l'extérieur de la pièce, au moyen d'une admission **A6** du circuit d'air **A,** vers l'intérieur de la pièce. Il peut également conduire l'air depuis l'intérieur de la pièce, grâce à une admission **A2** disposée à l'intérieur de la pièce, et le redistribuer à l'intérieur de la pièce en circuit fermé, soit sans traitement thermique, via une sortie **A3,** située avant le module d'échange thermique **MET,** soit après un échange thermique à travers le module d'échange thermique **MET,** par la sortie **A4,** située après le module d'échange thermique **MET.** Le circuit d'air **A** comporte optionnellement un second ventilateur **V2,** permettant de conduire l'air depuis l'intérieur de la pièce, au moyen de l'admission **A1** disposée à l'intérieur de la pièce, vers l'extérieur de la pièce, par la sortie **A5,** à travers le module de renouvellement d'air **MRA.** Le circuit d'air **A** comporte une ou plusieurs vannes de manière à contrôler l'origine des flux d'air et leur sortie. Une première vanne **R1** peut être par exemple disposée entre une admission d'air interne à la pièce, telle que l'admission **A1,** et une sortie d'air vers l'extérieur, telle que la sortie **A5.**

Selon un mode de réalisation, la première vanne **R1** peut être de type ouvert/fermé et prendre l'une des deux positions ouverte ou fermée, selon que le flux d'air vers l'extérieur est autorisé ou non. Le second ventilateur **V2** peut en outre être activé et désactivé en fonction de la position ouverte ou fermée de la première vanne **R1.** En l'occurrence, il peut être activé lorsque la première vanne **R1** est ouverte, de manière à faciliter le flux d'air. Le second ventilateur **V2** peut néanmoins rester inactif, même lorsque la première vanne **R1** est ouverte, de manière à limiter le flux d'air sortant. La première vanne **R1,** lorsqu'elle est conçue pour prendre les deux positions distinctes ouverte et fermée, peut être activée par un activateur externe, qu'il soit manuel ou mécanisé. Alternativement, elle peut prendre la forme d'un clapet activable par le flux d'air généré par le second ventilateur **V2** et traversant le circuit d'air **A.** En d'autres termes la première vanne **R1** peut être conçue de manière à laisser passer l'air dans le circuit d'air A sous l'action du second ventilateur **V2** et à fermer automatiquement le circuit d'air **A** à l'arrêt du second ventilateur **V2.**

Selon un mode de réalisation alternatif, la première vanne **R1** peut être une vanne trois voies. En l'occurrence, la première vanne **R1** peut permettre, dans une première position, un échange d'air entre l'intérieur du bâtiment et l'extérieur à travers le module de renouvellement d'air **MRA,** et dans une seconde position, permettre un échange d'air entre l'intérieur du bâtiment et l'extérieur sans traverser le module de renouvellement d'air **MRA,** grâce notamment à une conduite distincte reliant l'admission interne à la pièce **A7** à la vanne **R1.** Le module de renouvellement d'air **MRA** peut ainsi être « by-passé ».

Les deux alternatives concernant la première vanne **R1,** qu'elle soit de type fermé/ouvert ou à trois voies, peuvent être indépendamment associées aux autres éléments de la présente invention.

Une seconde vanne **R2** permet par exemple d'établir un flux d'air entrant depuis l'extérieur, au moyen de l'admission **A6,** vers l'intérieur de la pièce, notamment grâce à l'activation du premier ventilateur **V1.** Dans ce cas, la seconde vanne **R2** peut être une vanne simple et prendre une des deux positions ouverte ou fermée. Alternativement, la seconde vanne **R2** est une vanne trois voies, permettant de sélectionner deux sources d'admission d'air différentes. Elle peut alors permettre l'admission d'air depuis l'extérieur, via l'admission **A6,** ou depuis l'intérieur de la pièce via l'admission **A2.** Selon cette dernière configuration, le module de renouvellement d'air **MRA** est dit « bypassé ». Le premier ventilateur **V1** permet d'activer le flux d'air à travers la seconde vanne **R2.**

Une troisième vanne **R3** peut être disposée en aval du premier ventilateur **V1.** Cette troisième vanne **R3** est de préférence une vanne 3 voies, permettant de diriger l'air sortant directement dans la pièce ou bien à travers le module d'échange thermique **MET.** Lorsque l'air est dirigé directement dans la pièce le module d'échange thermique **MET** est dit « bypassé ».

Le module de renouvellement d'air **MRA** est dit inactif lorsque la première vanne **R1** et la seconde vanne **R2** interdisent les échanges d'air entre l'intérieur et l'extérieur de la pièce à travers le module de renouvellement d'air **MRA.** En particulier, la seconde vanne **R2** est disposée de manière à laisser transiter l'air depuis l'admission intérieure **A2** vers le premier ventilateur **V1.** La première vanne **R1,** lorsqu'elle est de type ouvert/fermé, est en position fermée. Lorsque la première vanne **R1** est une vanne trois voies, elle est en position de bypass du module de renouvellement d'air **MRA.** En d'autres termes aucun flux d'air ne traverse le module de renouvellement d'air **MRA.** Le flux d'air peut néanmoins s'effectuer entre l'admission interne à la pièce **A7** et la sortie **A5,** via une conduite séparée et indépendante du module de renouvellement d'air **MRA.** Le second ventilateur **V2,** lorsqu'il est présent, peut être activé ou rester inactif. L'activation du second ventilateur **V2** permet un meilleur échange, notamment lorsque le premier ventilateur **V1** est actif.

Le module de renouvellement d'air **MRA** est dit actif lorsque l'une des deux vannes **R1** et **R2,** ou les deux, sont orientées de manière à laisser transiter l'air à travers le module de renouvellement d'air **MRA,** soit en simple flux soit en flux croisé. En particulier, le module de renouvellement d'air **MRA** est actif quand la seconde vanne **R2** est orientée de manière à laisser transiter l'air depuis l'admission extérieure **A6** vers l'intérieur de la pièce et que le premier ventilateur **V1** est actif. Le module de renouvellement d'air **MRA** est également actif quand la première vanne **R1** est orientée de manière à laisser transiter l'air depuis l'admission **A1,** à l'intérieur de la pièce, vers la sortie **A5.** Dans ce cas, si la première vanne **R1** est de type ouverte/fermée, elle est en position ouverte. Si la première vanne **R1** est de type trois voies, elle est orientée de manière à laisser l'air transiter à travers le module de renouvellement d'air **MRA.** Le second ventilateur **V2,** lorsqu'il est présent peut être activé ou non activé. Le module de renouvellement d'air **MRA** est également actif lorsque la première vanne **R1** est orientée de manière à laisser transiter l'air depuis l'admission **A1,** à l'intérieur de la pièce, vers la sortie **A5** et la seconde vanne **R2** est orientée de manière à laisser transiter l'air depuis l'admission extérieure **A6** vers l'intérieur de la pièce, déterminant ainsi un flux croisé. Le second ventilateur **V2,** lorsqu'il est présent, peut alors être activé ou non activé.

Le circuit d'air **A** est configurable pour bypasser le module de renouvellement d'air **MRA** ou le module d'échange thermique **MET** ou aucun de ces modules, au moyen des seconde **R2** et troisième **R3** vannes. Plus particulièrement, la position simultanées des seconde **R2** et troisième **R3** vannes détermine le mode de fonctionnement de l'échangeur thermique **1.** En outre, le module de renouvellement d'air **MRA** peut faire l'objet d'une régulation indépendante grâce à la première vanne **R1,** qu'elle soit du type ouvert/fermée ou du type trois voies. Le flux d'air sortant à travers le module de renouvellement d'air **MRA** peut être stoppé ou autorisé, dans le cas d'une vanne de type ouvert/fermé, ou bien détourné du module de renouvellement d'air **MRA** dans le cas d'une vanne trois voies.

Un mode «renouvellement d'air» est défini lorsque la seconde vanne **R2** est orientée de manière à faire transiter l'air depuis l'extérieur, via l'admission **A6,** vers l'intérieur de la pièce. Selon ce mode, la première vanne **R1** peut en outre être ouverte de manière à laisser transiter l'air depuis l'admission **A1** à l'intérieur de la pièce vers la sortie extérieure **A5,** lorsqu'elle est de type ouvert/fermé, ou bien, lorsqu'elle est de type trois voies, être placée dans l'une ou l'autre des positions laissant passer le flux d'air sortant à travers le module de renouvellement d'air **MRA** ou directement à travers la paroi **P,** via l'admission **A7.** Le second ventilateur **V2,** lorsqu'il est présent peut en outre être activé. Le mode « renouvellement d'air » permet au moins un flux d'air entrant, depuis l'extérieur de la pièce vers l'intérieur, et optionnellement un flux d'air sortant.

Un mode « recyclage d'air» permet de limiter les échanges d'air entre la pièce et l'extérieur. Il est défini lorsque la seconde vanne **R2** est orientée de manière à faire transiter l'air depuis l'intérieur, via l'admission **A2,** vers une sortie **A3** ou **A4** interne à la pièce. Dans ce mode, la première vanne **R1** est de préférence en position fermée si la vanne est de type ouvert/fermée et le ventilateur **V2** s'il est présent, est de préférence désactivé. Le premier ventilateur **V1** peut être activé. Si la première vanne **R1** est de type trois voies, elle est de préférence orientée de manière à laisser transiter l'air depuis l'admission intérieure **A7** vers l'extérieur de la pièce et le second ventilateur **V2** est de préférence inactif. Le mode « recyclage d'air » permet ainsi de limiter, voire de supprimer, les échanges d'air entre l'intérieur de la pièce et l'extérieur.

Un mode «échange thermique» est défini lorsque la troisième vanne **R3** est orientée de manière à faire transiter l'air depuis le premier ventilateur **V1,** quelle que soit son origine, vers le module d'échange thermique **MET,** et la sortie **A4.** Le ventilateur **V1** est activé. Le mode «échange thermique» permet alors de favoriser les échanges thermiques entre l'air circulant dans le circuit d'air **A** et le module d'échange thermique **MET.**

Un mode « isotherme » est défini lorsque la troisième vanne **R3** est orientée de manière à faire transiter l'air depuis le premier ventilateur **V1,** quel que soit son origine, vers la sortie **A3,** située en amont du module d'échange thermique **MET.** Le ventilateur **V1** est activé. Le mode « isotherme » permet alors d'éviter les échanges thermiques entre l'air circulant dans le circuit d'air **A** et le module d'échange thermique **MET.**

L'échangeur thermique **1** selon la présente invention permet de combiner les modes « échange thermique » et « isotherme » avec les modes « renouvellement d'air » et « recyclage d'air » dans toutes les combinaisons. Notamment, le mode « échange thermique » peut être effectué en combinaison avec le mode «renouvellement d'air» ou bien avec le mode «recyclage d'air ». Le mode « isotherme » peut être fait en combinaison avec le mode « renouvellement d'air » ou « recyclage d'air ».

Dans l'ensemble de la présente description, les termes « amont » et « aval » s'entendent relativement au sens de circulation du fluide considéré, qu'il s'agisse de l'air ou de l'eau. La seconde vanne **R2** est par exemple située en amont du premier ventilateur **V1,** dans le sens de circulation d'air depuis l'une des admissions **A6** ou **A2** vers l'une des sorties **A3** ou **A4.** La troisième vanne **R3** est quant à elle située en aval du premier ventilateur **V1.**

Dans l'ensemble de la présente description les termes « bypass », « bypasser », « bypassant » désignent le fait d'exclure un élément du circuit du flux transitant à travers ce circuit. En l'occurrence, bypasser le module de renouvellement d'air **MRA** signifie que le circuit d'air **A** est modulé de sorte que le flux d'air ne traverse pas le module de renouvellement d'air **MRA.** En particulier, lorsque la vanne **R1** est de type trois voies, l'air sortant de la pièce vers l'extérieur peut soit transiter entre **A1** et **A5** à travers le module de renouvellement d'air **MRA,** soit bypasser ce module si l'air transite depuis l'admission intérieure **A7** vers la sortie **A5.** Dans ce dernier cas, les flux croisés sont impossibles.

Le module de renouvellement d'air **MRA** peut en outre comprendre un filtre (non représenté), un ou plusieurs dispositifs électriques ou mécaniques et d'autres accessoires couramment utilisés dans ce genre de dispositifs. Le module de renouvellement d'air **MRA** peut alternativement prendre la forme d'un système centralisé.

Le système d'approvisionnement de chaleur ou de froid **E** de l'échangeur thermique **1** selon la présente invention comporte, une admission **E1** et une sortie **E2.** Le système d'approvisionnement de chaleur ou de froid **E** est en contact avec le module d'échange thermique **MET,** de manière à établir un échange thermique les éléments du module d'échange thermique **MET.** En particulier, le système d'approvisionnement de chaleur ou de froid E peut comprendre un ensemble de canalisations intégré dans les parois du module d'échange thermique **MET.** De telles parois peuvent en outre être configurées de manière à augmenter la surface d'échange. Elles peuvent à ce titre comporter des plaques ou des lames au sein desquelles transite un fluide du système d'approvisionnement de chaleur ou de froid E. Des arrangements variés peuvent être envisagés. Le système d'approvisionnement de chaleur ou de froid **E** peut être confondu ou raccordé au circuit de chauffage central du bâtiment. Alternativement, il peut être raccordé à un circuit indépendant, éventuellement pourvu d'une pompe à chaleur **P.** Le fluide circulant dans le système d'approvisionnement de chaleur ou de froid **E** peut être de l'eau chaude, c'est-à-dire circulant à une température significativement plus élevée que celle de la pièce, telle que 40°C ou 60°C ou 80°C ou plus. Alternativement, le fluide circulant dans le circuit d'eau peut être de l'eau froide, c'est-à-dire non préalablement chauffée, ou éventuellement déjà refroidie. Pour assurer une efficacité optimale du module d'échange thermique et du transfert de chaleur entre le système d'approvisionnement de chaleur ou de froid et ce dernier module, il est indiqué d'isoler thermiquement les canalisations et le module d'échange thermique du reste du bâtiment.

Selon un mode de réalisation, le système d'approvisionnement de chaleur ou de froid E comprend un fluide en circulation. Le fluide peut être un liquide ou un gaz. Le fluide en circulation est de préférence de l'eau.

Une partie du circuit d'air **A**, notamment la partie comprise entre la troisième vanne **R3** et la sortie **A4,** est en contact avec le module d'échange thermique **MET,** de manière à établir un échange thermique entre l'air qui circule dans le circuit d'air **A** et les autres éléments du module d'échange thermique **MET.**

Le module d'échange thermique **MET** comprend un ou plusieurs dispositifs de stockage thermique. De tels dispositifs de stockage thermique ont la capacité de stocker une énergie thermique et de favoriser ainsi une inertie thermique exploitable par exemple, pour limiter les variations de température naturelles sans apport d'énergie ou avec un faible apport d'énergie. Les dispositifs de stockage thermique sont disposés au sein du module d'échange thermique **MET** de manière à permettre les échanges thermiques entre le circuit d'eau E et le circuit d'air **A.**

Selon un mode de réalisation préféré, les dispositifs d'échange thermique comprennent un ou plusieurs matériaux à changement de phase, connus sous le sigle de PCM (Phase Change Material). Un tel matériau peut alors être disposé de manière à entourer les éléments du système d'approvisionnement de chaleur ou de froid E traversant le module d'échange thermique **MET.** Les matériaux à changement de phase passent d'un état liquide à un état solide en restant à une température donnée et permettent ainsi des échanges thermiques efficaces et facilement contrôlables. Les dispositifs de stockage thermique peuvent prendre par exemple la forme de plaques, comprenant des matériaux à changement de phase. Les plaques sont en contact avec le système d'approvisionnement de chaleur ou de froid **E** de manière à en favoriser les échanges thermiques. L'air du circuit d'air **A** peut circuler entre ces plaques et sortir à la sortie **A4** à une température **T4** différente de sa température d'admission **T2,** interne à la pièce, ou **T6** extérieure.

Le cas échéant, le matériau à changement de phase est déterminé pour changer d'état à une température comprise entre 20°C et 30°C, de préférence entre 21°C et 28°C, voire entre 23°C et 26°C, qui correspond à une plage de température confortable. La température du matériau PCM reste sensiblement constante pendant toute la durée du changement de phase. Le changement de phase correspond à une variation d'état du matériau entre un état solide et un état liquide ou visqueux. Les matériaux à changement de phase ayant les températures de changement de phase les plus basses sont propices au stockage du froid et au rafraîchissement durant l'été. Les matériaux à changement de phase ayant les températures de changement de phase les plus hautes sont quant à eux propices au stockage de la chaleur et au chauffage durant l'hiver. Les matériaux dont les températures de changement de phase sont médianes peuvent être avantageusement utilisés dans les deux configurations de stockage de froid ou de chaleur en fonction des saisons.

Dans le contexte des bâtiments les matériaux à changement de phase peuvent typiquement être des paraffines comme le RT22 de Rubitherm, ou des sels hydratés comme le Pluslce PCM S23 d'EPS limited ou le Climsel C24 de Climator avec des chaleurs latentes de 150-200 KJ/kg. Les sels hydratés sont sélectionnés de manière à ne pas être corrosifs vis-à-vis des matériaux avec lesquels ils sont en contact.

Alternativement, des matériaux différents des matériaux à changement de phase peuvent être utilisés, notamment des matériaux à grande inertie thermique, tel que pierres ou bétons.

Les éléments décrits ci-dessus correspondent à un mode de mise en oeuvre sans pour autant s'y limiter. L'échangeur thermique selon la présente invention couvre des arrangements différents pour autant qu'ils permettent de moduler à la fois le circuit d'air **A** et le un système d'approvisionnement de chaleur ou de froid **E.** De manière avantageuse, l'échangeur thermique **1** comprend un ou plusieurs capteurs de température (**KA1, KA4, KA6, KE1, KE2**). Un capteur de température **KA1** peut par exemple être disposé dans la pièce pour en déterminer la température ambiante **T1.** Un autre capteur de température **KA6** peut être disposé à l'extérieur pour déterminer la température **T6** de l'air extérieur. Un capteur de température d'air **KA4** peut être disposé en aval du module d'échange thermique **MET** pour en mesurer la température de l'air sortant **T4.** Alternativement ou en plus un capteur de température **KE2** peut être disposé dans le système d'approvisionnement de chaleur ou de froid **E,** en aval du module d'échange thermique **MET.** Un capteur de température d'eau **KE1** peut, alternativement ou en plus, être disposé en amont du module d'échange thermique **MET.**

Les températures d'admission **T1** et **T2,** internes à la pièce, peuvent être égales ou différentes. En particulier, la température d'admission **T2** peut être supérieure à la température d'admission **T1.**

L'échangeur thermique **1** peut comprendre une unité de contrôle **UC,** permettant de recueillir les données mesurées par l'un ou plusieurs des capteurs disposés dans le système. Les capteurs de température d'air **A1, A6, A4,** et le cas échéant les capteurs de température **KE1** et **KE2** sont connectés à l'unité de contrôle **UC** via des liaisons câblées, ou non câblées du type wifi, Bluetooth ou équivalent.

Les ventilateurs **V1** et le cas échéant **V2** peuvent être connectés à l'unité de contrôle **UC** de manière à être activés automatiquement en fonction des données collectées par l'unité de contrôle **UC.** Les directions des flux d'air créés par les ventilateurs **V1 et V2** sont typiquement celles indiquées par les flèches de la Figure **1****.** En particulier, le premier ventilateur **V1** tourne de manière à créer un flux d'air dans la direction du module d'échange thermique **MET,** bien que l'air puisse être dirigé par la troisième vanne **R3** vers le module d'échange thermique **MET** ou directement vers la pièce, et le second ventilateur **V2,** lorsqu'il est présent, tourne de manière à créer un flux sortant depuis l'une ou l'autre des admissions internes **A1** et **A7** vers la sortie **A5.**

Des modes de fonctionnement particuliers des premiers **V1** et second **V2** ventilateurs peuvent néanmoins être envisagés, notamment lorsque le module d'échange thermique comprend plusieurs matériaux à changement de phase, ayant des températures de changement de phase différentes. Selon cette disposition, le premier ventilateur **V1** est conçu de manière à tourner dans les deux sens, et permettre ainsi un flux d'air sortant issu du module d'échange thermique **MET.** Selon cette même disposition, le second ventilateur **V2,** lorsqu'il est présent, est conçu pour tourner dans les deux sens, et permettre ainsi un flux d'air entrant dans la pièce. Le sens de rotation des premier **V1** et second **V2** ventilateurs est piloté en fonction du mode de fonctionnement désiré de l'échangeur thermique **1.** Si le sens de rotation des ventilateurs **V1** et **V2** change par rapport au sens indiqué par les flèches de la Figure **1****,** les entrées d'air **A1,A2,A6** et **A7** deviennent des sorties d'air, alors que les sorties d'air **A3, A4** et **A5** deviennent des entrées d'air.

Les première **R1,** seconde **R2** et troisième **R3** vannes peuvent être également connectées à l'unité de contrôle **UC,** de manière à être activées automatiquement en fonction des données collectées.

L'unité de commande **UC** peut en outre comprendre un ou plusieurs programmes préenregistrés correspondant à un ou plusieurs états d'activation de l'échangeur thermique **1.** Les états d'activation de l'échangeur thermique incluent les modes « échange thermique », « isotherme », « renouvellement d'air » et « recyclage d'air » définis plus haut. Chacun de ces programmes détermine en particulier la position des première **R1,** seconde **R2,** troisième **R3** vannes, l'état d'activation des ventilateurs **V1** et le cas échéant **V2,** le flux de circulation de l'eau dans le circuit d'eau **E,** et potentiellement d'autres paramètres. L'unité de contrôle **UE** peut être configurée pour appliquer un programme prédéterminé en fonction des données recueillies.

L'unité de contrôle **UC** peut comprendre en outre un ou plusieurs programmes journaliers ou saisonniers, activables automatiquement selon les périodes de la journée ou de l'année. A cet effet, l'unité de contrôle **UC** peut comprendre une pendule et/ou un calendrier, ou tout autre dispositif de détermination du temps permettant d'initier et de stopper un programme.

L'unité de contrôle **UC** peut en outre être connectée à une pompe **P,** telle qu'une pompe à chaleur ou un accélérateur d'installation de chauffage central, permettant de faire circuler l'eau dans le circuit d'eau **E.** Elle peut alors activer la pompe **P** en fonction des données recueillies par les capteurs et/ou du programme préétabli.

L'unité de contrôle **UC** peut en outre comprendre une interface de commande (non représentée) permettant de programmer les instructions relatives au pilotage de l'échangeur thermique **1.**

Dans le contexte de l'invention décrite ici, une paroi **P** représente tout élément séparant un espace donné de l'extérieur. Il peut s'agir d'un mur, d'une cloison, d'un plancher ou plafond, ou d'un toit. La pièce désigne l'espace ainsi séparé de l'extérieur. Il peut s'agir d'une pièce particulière au sein d'un bâtiment ou d'un groupe de pièces, ou de la totalité de l'espace d'un bâtiment.

L'échangeur thermique **1** peut comprendre plus d'un module de renouvellement d'air **MRA,** associés chacun à un circuit d'air **A** indépendant, comprenant des vannes et des ventilateurs dans la même disposition que celle décrite plus haut. De cette manière, les flux d'air peuvent être modulés avec plusieurs espaces extérieurs, l'un pouvant être l'extérieur du bâtiment et un autre pouvant être une autre pièce interne au bâtiment et dont la température diffère de celle de la pièce où est installé le module d'échange thermique **MET.** Les combles et les caves peuvent par exemple être mis à profit pour leur différence de température avec les étages médians. Selon une autre configuration possible, deux modules de renouvellement d'air **MRA** peuvent être disposés chacun sur les façades opposées d'un même bâtiment. Les différences d'ensoleillement peuvent alors être exploitées avantageusement, notamment lorsque les modules de renouvellement d'air **MRA** et leurs vannes et ventilateurs associés sont pilotés indépendamment l'un de l'autre.

Selon un mode de réalisation, la vitesse de rotation des premiers **V1** et second **V2** ventilateurs d'un circuit d'air **A** donné peut être modulée en fonction des débits d'air et des puissances de chauffage ou de rafraichissement désirés. La vitesse de l'air circulant dans le circuit d'air **A** peut être par exemple modulable, de façon continue ou par paliers prédéterminés, entre 0 et 5 ms⁻¹, entre 0 et 2 ms⁻¹, ou entre 0 et 1 ms⁻¹. Le débit d'air peut être avantageusement régulé automatiquement par l'unité de commande **UC.** Dans le cas où plusieurs circuits d'air distincts sont agencés avec un même module d'échange thermique **MET,** le débit d'air de chacun d'eux peut être régulé individuellement.

L'échangeur thermique **1** permet d'optimiser les flux d'air et d'eau en fonction des saisons et des périodes journalières. Il permet en particulier de différer les échanges thermiques à des périodes où ils sont profitables pour le maintien d'une température confortable dans la pièce. Il permet en outre de maintenir une température constante malgré les variations de température naturelles. Une température est dite confortable aux alentours de 21°C, plus généralement entre 20 et 25°C selon les saisons.

La présente invention couvre en l'occurrence une méthode de régulation thermique. La méthode de régulation selon la présente invention comprend en particulier une phase de charge **D1.** La phase de charge **D1,** qui peut être suivie d'une phase de stockage **D2,** consiste à amener le module d'échange thermique **MET** à une température de stockage **Td2.** La température de stockage **Td2** peut être obtenue dans le module d'échange thermique **MET** par une charge provenant soit du circuit d'eau **E** soit du circuit d'air **A.** Lorsque la température de stockage **Td2** est obtenue par le circuit d'eau **E,** elle correspond à une température se situant entre la température initiale des matériaux de stockage du module d'échange thermique MET et la température **T'1** d'arrivée d'eau. Lorsque la température de stockage **Td2** est obtenue par le circuit d'air **A,** elle correspond à une température se situant entre la température initiale des matériaux de stockage du module d'échange thermique MET et de l'une ou l'autre des températures extérieure **T6** ou intérieure **T1.**

Lorsque le module d'échange thermique **MET** comprend un matériau à changement de phase, la température de stockage **Td2** correspond à la température de changement de phase du matériau. La phase de charge **D1** permet dans ce cas d'amener le matériau à changement de phase dans l'une de ses deux phases liquide ou solide, de manière à permettre un changement de phase ultérieur.

La phase de stockage **D2** correspond à la conservation de la température de stockage **Td2** avec le matériau à changement de phase en phase préférentiellement liquide en périodes hivernales et préférentiellement solide en périodes estivales.

Les phases de charge et de stockage peuvent être concomitantes ou non concomitantes au renouvellement de l'air par le module de renouvellement d'air **MRA.** En d'autres termes, les phases de charge **D1** et de stockage **D2** peuvent s'effectuer en mode «renouvellement d'air» ou en mode « recyclage d'air ».

Les phases de charge **D1** et de stockage **D2** peuvent être respectivement des phases de charge de chaleur **D1c** et de stockage de chaleur **D2c,** particulièrement adaptée aux périodes hivernales et/ou nocturnes.

Selon un mode de réalisation particulier, les phases de charge de chaleur **D1c** et de stockage de chaleur **D2c** se caractérisent par le fait que, lorsque le module de renouvellement d'air **MRA** est actif, la troisième vanne **R3** est disposée de manière à orienter l'air vers l'intérieur de la pièce, par la sortie **A3.** Il s'agit alors de la combinaison du mode « renouvellement d'air » et du mode « isotherme » décrits plus haut. Le premier ventilateur **V1** est activé. Selon cette disposition, l'air froid provenant de l'extérieur par l'admission **A6,** ne traverse pas le module d'échange thermique **MET,** et reste à la même température que celle qu'il avait à sa traversée du ventilateur **V1.** Pour une phase de charge de chaleur **D1c,** le système d'approvisionnement de chaleur ou de froid **E,** est activé pour faire circuler de l'eau chaude le cas échéant, à travers le module d'échange thermique **MET.** L'activation du circuit d'eau chaude peut être avantageuse lors des périodes où l'énergie utilisée pour chauffer l'eau coûte moins cher. La température de stockage **Td2,** supérieure à la température extérieure **T6,** est alors obtenue à moindre frais.

Selon un autre mode de réalisation, les phases de charge et de stockage de chaleur, respectivement **D1c** et **D2c** peuvent être réalisées en faisant circuler de l'air, issu de l'extérieur par l'admission **A6** ou issu de l'intérieur par l'admission **A2,** à travers le module d'échange thermique **MET,** dans le cas où l'une ou l'autre des températures d'admission **T1** et **T6** est supérieure à une température seuil de chaleur **Tsc** prédéterminée. Par exemple, en période diurne en demi-saison, la température extérieure **T6** peut être supérieure à la température seuil **Tsc** sur la surface extérieure **SE** de la paroi **P,** notamment en raison d'un fort ensoleillement local et ponctuel. L'air extérieur peut alors être avantageusement admis dans le module d'échange thermique **MET** pour y stocker l'énergie thermique en vue de son exploitation en période nocturne, où la température tend à fortement diminuer. L'air extérieur peut être alternativement l'air d'une autre pièce du bâtiment, telle qu'une salle de serveur informatique ou une véranda ou toute autre pièce bénéficiant d'une source de chaleur. La température seuil de chaleur **Tsc** peut être déterminée comme étant supérieure à 20°C, à 22°C ou plus élevée. Dans cette situation, la phase de charge de chaleur **D1c** correspond à la combinaison des modes «échange thermique » et « renouvellement d'air » décrits plus haut.

Les capteurs **KA6** et **KA1** ou d'autre capteurs peuvent être mis à profit pour déterminer dans quelle mesure le module de renouvellement d'air **MRA** et le module d'échange thermique **MET** doivent être activés ou désactivés lors de cette phase de charge de chaleur **D1c.**

Les phases de charge et de stockage de chaleur, respectivement **D1c** et **D2c** peuvent être initiées automatiquement par l'unité de contrôle **UC** en fonction de la période de l'année, ou de période dans la journée, ou de la température extérieure **T6,** ou en fonction de la différence de température extérieure **T6** et intérieure **T1,** ou en fonction d'une température seuil, ou en fonction de plusieurs de ces paramètres. En particulier, l'unité de contrôle **UC** peut être programmée pour passer automatiquement dans des modes de « phase de charge de chaleur » ou de « phase de stockage de chaleur ».

Les phases de charge **D1** et de stockage **D2** peuvent être respectivement des phases de charge de froid **D1f** et de stockage de froid **D2f,** particulièrement adaptée aux périodes estivales et/ou diurne.

Selon un mode de réalisation, les phases de charge de froid **D1f** et de stockage de froid **D2f** se caractérisent par le fait que, lorsque le module de renouvellement d'air **MRA** est actif, la troisième vanne **R3** est disposée de manière à orienter l'air vers l'intérieur de la pièce, par la sortie **A3.** Il s'agit alors de la combinaison du mode «renouvellement d'air» et du mode « isotherme » décrits plus haut. Selon cette disposition, l'air chaud provenant de l'extérieur par l'admission **A6,** ne traverse pas le module d'échange thermique **MET,** qui reste à sa propre température. En phase de charge de froid **D1f** le système d'approvisionnement de chaleur ou de froid E est activé pour faire circuler de l'eau froide le cas échéant, à travers le module d'échange thermique **MET,** dans le cas où une pompe à chaleur inversée est prévue dans le circuit. L'activation du circuit d'eau froide peut être avantageuse lors des périodes où l'énergie utilisée pour refroidir l'eau coûte moins cher. La température de stockage **Td2,** inférieure à la température extérieure **T6,** est alors obtenue à moindre frais.

Selon un autre mode de réalisation, les phases de charge de froid **D1f** et de stockage de froid **D2f** peuvent être réalisées en faisant circuler de l'air, issu de l'extérieur par l'admission **A6** ou issu de l'intérieur par l'admission **A2,** à travers le module d'échange thermique **MET,** dans le cas où l'une ou l'autre des températures d'admission **T1** et **T6** est inférieure à une température seuil de froid **Tsf** prédéterminée. Par exemple, en période nocturne en demi-saison, la température extérieure **T6** peut être inférieure à la température seuil de froid **Tsf** sur la surface extérieure **SE** de la paroi **P.** L'air extérieur peut alors être avantageusement admis dans le module d'échange thermique **MET** pour y stocker le froid en vue de son exploitation en période diurne, où la température tend à fortement augmenter, notamment pour les pièces du bâtiment exposées aux rayonnements solaires. L'air extérieur peut être alternativement l'air d'une autre pièce du bâtiment, telle qu'une salle climatisée ou réfrigérée ou bénéficiant naturellement d'une température plus fraiche. La température seuil de froid **Tsf** peut être déterminée comme étant inférieure à 22°C, inférieure à 18°C ou plus basse. Dans cette situation, la phase de charge de froid **D1f** correspond à la combinaison des modes « échange thermique » et « renouvellement d'air» décrits plus haut.

Les températures de seuil de chaleur **Tsc** et de froid **Tsf** peuvent être égales ou différentes.

Les capteurs **KA6** et **KA1** ou d'autre capteurs peuvent être mis à profit pour déterminer dans quelle mesure le module de renouvellement d'air **MRA** et le module d'échange thermique **MET** doivent être activés ou désactivés pour les phases de charge **D1f** et de stockage de froid **D2f.**

La phase de stockage de froid **D1f** peut être initiée automatiquement par l'unité de contrôle **UC** en fonction de la période de l'année, ou de la journée, ou de la température extérieure **T6,** ou en fonction de la différence de température extérieure **T6** et intérieure **T1,** ou en fonction de plusieurs de ces paramètres. En particulier, l'unité de contrôle **UC** peut être programmée pour passer automatiquement dans un mode « phase de charge de froid » ou un mode « phase de stockage de froid ».

La méthode selon la présente invention comprend une seconde phase **D3** de relargage, durant laquelle le module d'échange thermique **MET** transmet la température **Td2,** acquise durant la phase de charge **D1** et conservée durant la phase de stockage **D2,** à l'un ou l'autre système d'approvisionnement de chaleur ou de froid **E** ou du circuit d'air **A,** de préférence au circuit d'air **A.**

La phase de relargage **D3** peut être une phase de relargage de chaleur **D3c,** particulièrement adaptée aux périodes hivernales. La phase de relargage de chaleur **D3c** se caractérise par le fait que, lorsque le module de renouvellement d'air **MRA** est actif, la troisième vanne **R3** est disposée de manière à orienter l'air vers le module d'échange thermique **MET** puis vers la sortie **A4.** Il s'agit de la combinaison des modes « renouvellement d'air» et «échange thermique» décrit plus haut. Dans le cas où le module de renouvellement d'air **MRA** est inactif, il s'agit de la combinaison des modes «recyclage d'air» et «échange thermique » décrits plus haut. Le premier ventilateur **V1** est enclenché. Selon cette disposition, l'air provenant de l'extérieur par l'admission **A6,** ou celui de la pièce provenant de l'admission **A2,** et dont la température **T6** ou **T2** est inférieure à la température du module d'échange thermique **MET,** se réchauffe à travers le module d'échange thermique **MET.** Cela permet de ne pas activer le circuit d'eau chaude. La température **T4** de l'air sortant à la sortie **A4** est supérieure à celle de l'air extérieur éventuellement pris par l'admission **A6.** La phase de relargage de chaleur **D3c** est de préférence activée lorsque la température de l'air à la sortie **A4** du circuit d'air **A** est supérieure à la température ambiante **A1.** Les capteurs **KA4** et **KA1** peuvent être mis à profit pour déterminer dans quelle mesure la phase de relargage de chaleur doit être activée ou désactivée. Dans le cas où le module d'échange thermique **MET** comprend un matériau à changement de phase, la température **T4** de l'air peut correspondre à celle de changement de phase du matériau. La phase de relargage de chaleur **D3c** peut alors perdurer tant que le changement de phase du matériau à changement de phase n'est pas terminé, et que sa température reste constante. La phase de relargage de chaleur **D3c** peut être initiée automatiquement et/ou arrêtée automatiquement par l'unité de contrôle **UC** en fonction de la période de l'année, ou de la journée, ou de la température extérieure **T6,** ou en fonction de la différence de température extérieure **T6** et intérieure **T1,** ou en fonction de la différence des températures **T4** et **T1,** ou en fonction de plusieurs de ces paramètres. En particulier, l'unité de contrôle **UC** peut être programmée pour passer automatiquement dans un mode « phase de relargage de chaleur» où elle oriente la troisième vanne **R3** de manière à faire sortir l'air par la sortie **A4.**

La phase de relargage **D3** peut être une phase de relargage de froid **D3f,** particulièrement adaptée aux périodes estivales. La phase de relargage de froid **D3f** se caractérise par le fait que, lorsque le module de renouvellement d'air **MRA** est actif, la troisième vanne **R3** est disposée de manière à orienter l'air vers le module d'échange thermique **MET** puis vers la sortie **A4.** Il s'agit de la combinaison des modes « renouvellement d'air » et «échange thermique » décrits plus haut. Lorsque le module de renouvellement d'air **MRA** est inactif, il s'agit de la combinaison des modes « recyclage d'air » et « échange thermique ». Le premier ventilateur **V1** est enclenché. Selon cette disposition, l'air chaud provenant de l'extérieur par l'admission **A6,** ou celui de la pièce par l'admission **A2,** se rafraichit à travers le module d'échange thermique **MET,** qui reste à la température de stockage **Td2.** La température **T4** de l'air sortant à la sortie **A4** est inférieure à celle de l'air extérieur éventuellement pris par l'admission **A6.** La phase de relargage de froid **D3f** peut être poursuivie tant que la température **T4,** à la sortie du module d'échange thermique **MET** est inférieure à la température **T1** de la pièce. Les capteurs **KA4** et **KA1** peuvent être mis à profit pour déterminer dans quelle mesure la phase de relargage doit être activée ou désactivée. Dans le cas où le module d'échange thermique **MET** comprend un matériau à changement de phase, la température **T4** de l'air peut correspondre à celle de changement de phase du matériau. La phase de relargage de froid **D3f** peut alors perdurer tant que le changement de phase du matériau à changement de phase n'est pas terminé, et que sa température **Td2** reste constante. La phase de relargage de froid **D3f** peut être initiée ou arrêtée automatiquement par l'unité de contrôle **UC** en fonction de la période de l'année, ou de la journée, ou de la température extérieure **T6,** ou en fonction de la différence de température extérieure **T6** et intérieure **T1, T2,** ou en fonction de la différence des températures **T4** et **T1,** ou en fonction de plusieurs de ces paramètres. En particulier, l'unité de contrôle **UC** peut être programmée pour passer automatiquement dans un mode « phase de relargage de froid » où elle oriente la troisième vanne **R3** de manière à faire sortir l'air par la sortie **A4.**

La méthode selon la présente invention peut comprendre en outre une phase de chauffage **D3.** La phase de chauffage **D3** se caractérise par la circulation de l'eau chaude simultanément à la circulation d'air à travers le module d'échange thermique **MET.** Pour ce faire, la troisième vanne **R3** est orientée de manière à laisser l'air circuler l'air à travers le module d'échange thermique **MET.** Le premier ventilateur **V1** est enclenché. La phase de chauffage peut être concomitante au renouvellement de l'air, c'est-à-dire lorsque le module de renouvellement de l'air **MRA** est activé. La phase de chauffage peut être non-concomitante au renouvellement de l'air, c'est-à-dire lorsque le module de renouvellement de l'air **MRA** est inactif.

La méthode selon la présente invention peut comprendre en outre une phase de rafraîchissement **D4.** La phase de rafraichissement **D4** se caractérise par la circulation de l'eau froide, le cas échéant, à travers le module d'échange thermique **MET** simultanément à la circulation d'air. Pour ce faire, la troisième vanne **R3** est orientée de manière à laisser l'air circuler l'air à travers le module d'échange thermique **MET.** Le premier ventilateur **V1** est enclenché. La phase de rafraichissement peut être concomitante au renouvellement de l'air, c'est-à-dire lorsque le module de renouvellement de l'air **MRA** est activé. La phase de rafraichissement peut être non-concomitante au renouvellement de l'air, c'est-à-dire lorsque le module de renouvellement de l'air **MRA** est inactif.

Selon un mode de réalisation particulier, le module d'échange thermique **MET** comprend deux températures d'échanges distinctes ou deux matériaux à changement de phase distincts, dont les températures de changement de phase sont différentes. La température de changement de phase de l'un des matériaux peut être de l'ordre de 23°C, ou 22°C ou moins. La température de changement de phase de l'autre matériau peut être de l'ordre de 25°C ou 26°C ou plus. Selon une telle disposition, l'échangeur thermique **1** peut être connecté à une pompe à chaleur réversible, permettant de refroidir le module d'échange thermique **MET.**

### Numéros de référence employés sur les figures

- 1: Echangeur thermique
- A: Circuit d'air
- A1, A2, A6: Admissions d'air
- A3, A4, A5: Sorties d'air
- D1: Phase de charge
- D1c: Phase de charge de chaleur
- D1f: Phase de charge de froid
- D2: Phase de stockage
- D2c: Phase de stockage de chaleur
- D2f: Phase de stockage de froid
- D3: Phase de relargage
- D3c: Phase de relargage de chaleur
- D3f: Phase de relargage de froid
- D4: Phase de chauffage
- D5: Phase de rafraîchissement
- E: un système d'approvisionnement de chaleur ou de froid
- E1: Admission du circuit d'eau
- E2: Sortie du circuit d'eau
- KA1, Ka6, KA4: Capteurs de température d'air
- KE1, KE2: Capteurs de température d'eau
- P: Paroi
- SI: Surface Interne
- SE: Surface externe
- P: Pompe
- R1: Première vanne
- R2: Seconde vanne
- R3: Troisième vanne
- T1, T2, T3, T4, T5, T6: Températures de l'air
- T'1, T'2: Températures de l'eau
- Td2: Température de stockage
- Tsc: Température seuil de chaleur
- Tsf: Température seuil de froid
- V1: Premier ventilateur
- V2: Second ventilateur
- MET: Module d'échange thermique
- MRA: Module de renouvellement d'air

## Revendications

1. Echangeur thermique (1) pour réguler la température interne d'un bâtiment, comprenant un module d'échange thermique (MET), un module de renouvellement d'air (MRA), un circuit d'air (A) dont une partie est en contact avec le module d'échange thermique (MET) et une autre partie est en contact avec le module de renouvellement d'air (MRA), un système d'approvisionnement de chaleur ou de froid (E) dont une partie est en contact avec le module d'échange thermique (MET), **caractérisé en ce que** le circuit d'air (A) comprend un premier ventilateur (V1), disposé entre le module de renouvellement d'air (MRA) et le module d'échange thermique (MET), une seconde vanne (R2) disposée entre le module de renouvellement d'air (MRA) et le premier ventilateur (V1), et une troisième vanne (R3) disposée entre le premier ventilateur (V1) et le module d'échange thermique (MET).

2. Echangeur thermique selon la revendication 1, **caractérisé en ce que** la seconde vanne (R2) est configurée pour appliquer un mode « renouvellement d'air », laissant transiter l'air depuis une admission extérieure (A6) vers le premier ventilateur (V1) ou pour appliquer un mode « recyclage d'air », laissant transiter l'air depuis une admission intérieure (A2) vers le premier ventilateur (V1).

3. Echangeur thermique selon l'une ou l'autre des revendications 1 ou 2, **caractérisé en ce que** la troisième vanne (R3) est configurée pour appliquer un mode « isotherme », laissant transiter l'air depuis le premier ventilateur (V1) vers la sortie (A3), en amont du module d'échange thermique (MET), ou pour appliquer un mode «échange thermique », laissant transiter l'air à travers le module d'échange thermique (MET) jusqu'à la sortie (A4) en aval du module d'échange thermique (MET).

4. Echangeur thermique selon la revendication 1, **caractérisé en ce que** le circuit d'air (A) comprend en outre une première vanne (R1), disposée entre une admission d'air (A1) interne à la pièce et traversant le module de renouvellement d'air (MRA), et une sortie d'air (A5) vers l'extérieur, et optionnellement un second ventilateur (V2), la première vanne (R1) étant du type ouvert/fermé ou bien de type trois voies dans le cas où une seconde admission d'air interne à la pièce (A7) permet d'exclure le module de renouvellement d'air du flux d'air.

5. Echangeur thermique selon l'une ou l'autre des revendications précédentes, **caractérisé en ce que** le système d'approvisionnement de chaleur ou de froid (E) est un circuit d'eau connecté à une source d'eau chaude, telle que le circuit de chauffage du bâtiment ou une pompe à chaleur (P), ou bien à une source d'eau froide, ou bien à une source d'eau pouvant être alternativement chauffée et refroidie.

6. Echangeur thermique selon l'une ou l'autre des revendications précédentes, **caractérisé en ce que** le module d'échange thermique (MET) comprend un ou plusieurs matériaux à changement de phase dont la température de changement de phase est comprise entre environ 21°C et 28°C.

7. Echangeur thermique selon l'une ou l'autre des revendications 1 à 5, **caractérisé en ce que** le module d'échange thermique (MET) comprend deux matériaux à changement de phase dont la température de changement de phase de l'un de ces matériaux est inférieure ou égale à 23°C et la température de changement de phase de l'autre de ces matériaux est supérieure ou égale à 24°C avec des sens de flux d'air dédiées à des phases de charge et de relargage de chaud qui peuvent changer dans le cas où la charge ou le relargage soit dédiée au froid.

8. Echangeur thermique selon l'une ou l'autre des revendications précédentes, **caractérisé en ce qu'**il comprend en outre un ou plusieurs capteurs de température (KA1, KA4, KA6, KE1, KE2) et une unité de commande (UC), où les capteurs (KA1, KA4, KA6, KE1, KE2) et le premier ventilateur (V1) sont connectés à l'unité de commande (UC).

9. Procédé de régulation thermique d'un bâtiment, **caractérisé en ce qu'**il comprend une phase de charge (D1) et de stockage (D2), permettant de mettre le module d'échange thermique (MET) à une température de stockage (Td2) et de la conserver, et une phase de relargage de chaleur ou de froid (D3), lors de laquelle un flux d'air est admis dans le module d'échange thermique (MET) à une température différente de la température intérieure (T1) via l'admission (A6) ou à la température intérieure (T1) via l'admission (A2) et ressort du module d'échange thermique (MET) à une température (T4) différente de sa température d'admission.

10. Procédé selon la revendication 9, **caractérisé en ce que** la phase de stockage est une phase de stockage de chaleur (D2c) où la température de stockage (Td2) est supérieure ou égale à la température intérieure (T1) du bâtiment, ou une phase de stockage de froid (D2f), où la température de stockage (Td2) est inférieure ou égale à la température intérieure (T1) du bâtiment.

11. Procédé selon l'une ou l'autre des revendications 9 et 10, **caractérisé en ce que** les phases de stockage de chaleur (D2c) et de stockage de froid (D2f) sont effectuées en combinant le mode « isotherme » tel que décrit dans la revendication 3, avec l'un ou l'autre des modes « renouvellement d'air » et « recyclage d'air », tels que décrits dans la revendication 2, et **en ce que** les phases de relargage de chaleur (D3c) et de relargage de froid (D3f) sont effectuées en mode «échange thermique » tel que décrit dans la revendication 3.
